# EUROPÄISCHE PATENTSCHRIFT

(11) **EP 3 404 292 B1**
(45) Veröffentlichungstag und Bekanntmachung des Hinweises auf die Patenterteilung: **01.07.2020**
(21) Anmeldenummer: 18173098.7
(22) Anmeldetag: 18.05.2018
(51) Int. Cl.: F16H 49/00

(54) **WELLENGENERATOR FÜR EIN SPANNUNGSWELLENGETRIEBE UND VERFAHREN ZUM HERSTELLEN EINES SPANNUNGSWELLENGETRIEBES**
WAVE GENERATOR FOR A WAVE GEAR DRIVE AND METHOD FOR PRODUCING A WAVE GEAR DRIVE
GÉNÉRATEUR D'ONDES POUR UNE TRANSMISSION À DÉMULTIPLICATION HARMONIQUE ET PROCÉDÉ DE FABRICATION D'UNE TRANSMISSION À DÉMULTIPLICATION HARMONIQUE

(30) Priorität: 19.05.2017 LU 100255
(43) Veröffentlichungstag der Anmeldung: 21.11.2018
(73) Patentinhaber: Ovalo GmbH, 65555 Limburg (DE)
(72) Erfinder:
(74) Vertreter: Hoffmann, Jürgen

(56) Entgegenhaltungen:
- DE-A1- 19 927 957
- US-A1- 2008 110 287
- US-A1- 2012 046 140

## Beschreibung

Die Erfindung betrifft ein Verfahren zum Herstellen eines Spannungswellengetriebes, bei dem ein radialflexibles Wälzlager auf dem Lagersitz eines Wellengenerators angeordnet wird.

Die Erfindung betrifft außerdem einen Wellengenerator für ein Spannungswellengetriebe, der einen Lagersitz für ein radialflexibles Wälzlager aufweist, sowie ein Spannungswellengetriebe das mit einem solchen Wellengenerator hergestellt ist.

Ein Spannungswellengetriebe besitzt zumeist ein starres, im Querschnitt kreisförmiges, innenverzahntes Zahnrad und ein flexibles außenverzahntes Zahnrad, das in dem von starren, innenverzahnten Zahnrad umgebenen Raumvolumen angeordnet ist. In dem außenverzahnten Zahnrad ist ein zumeist elliptischer Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnte Zahnrad rotieren zu können. Der Wellengenerator verbiegt das Wälzlager und das radialflexible, außenverzahnte Zahnrad zu einer elliptischen Form, um die Verzahnungen des innenverzahnten Zahnrades und des flexiblen außenverzahnten Zahnrades an jedem Ende der Ellipsen-Hauptachse miteinander in Eingriff zu bringen.

Das radialflexible, außenverzahnte Zahnrad weist eine geringere Anzahl von Zähnen auf, als das starre, innenverzahnte Zahnrad. Wenn der Wellengenerator rotiert, wälzt die Außenseite des außenverzahnten Zahnrades auf der Innenseite des innenverzahnten, starren Zahnrades ab, wobei die Zähne des flexiblen außenverzahnten Zahnrades an gegenüberliegenden Seiten umlaufend in und außer Eingriff mit den Zähnen des starren innenverzahnten Zahnrades gelangen. Aufgrund des Unterschiedes der Zähnezahlen kommt es zu einer Relativdrehung des radialflexiblen, außenverzahnten Zahnrades relativ zu dem starren, innenverzahnten Zahnrad, wenn der Wellengenerator rotiert wird. Der Wellengenerator muss nicht zwingend elliptisch ausgebildet sein. Vielmehr ist jede von der Kreisform abweichende Form möglich, die im Ergebnis den beschriebenen Eingriff der Verzahnung des flexiblen, außenverzahnten Zahnrades in die Verzahnung des innenverzahnten Zahnrades bewirkt. Auch ist es möglich, den Wellengenerator derart auszubilden, dass die Verzahnung des radialflexiblen, außenverzahnten Zahnrades an drei oder mehr Stellen in die Verzahnung des innenverzahnten Zahnrades eingreift.

Beispielsweise ist aus DE 199 27 957 A1 eine Wellengetriebeeinrichtung vom Topftyp bekannt.

Aus US 2008/0110287 ist ein Spannungswellengetriebe bekannt, bei dem eine außenverzahnte radialflexible Hülse an zwei gegenüberliegenden Stellen in Zahneingriff mit einer innenverzahnten radialflexiblen Hülse steht. Der Wellengenerator weist vier Rollen auf, von denen jeweils zwei derart angeordnet und beabstandet sind, dass sie die außenverzahnte radialflexible Hülse und die innenverzahnten radialflexible Hülse an den zwei gegenüberliegenden Stellen gegeneinander drücken und so den Zahneingriff bewirken. Ein radialflexibles Wälzlager weist das Spannungswellengetriebe nicht auf.

Bei der Herstellung eines Spannungswellengetriebes besteht eine Schwierigkeit darin, das radialflexible Wälzlager, insbesondere axial, auf dem Lagersitz sicher zu fixieren.

Dies wird zumeist dadurch bewerkstelligt, dass zusätzliche Bauteile, wie beispielsweise Sicherungsringe, montiert werden. Dies ist einerseits hinsichtlich der Montage aufwändig. Darüber hinaus muss der Wellengenerator aufwändig derart ausgebildet werden, dass er, beispielsweise durch das Einarbeiten einer Sicherungsnut, zur Aufnahme eines Sicherungsrings geeignet ist. Dies wirkt sich jedoch nachteilig auf die Kompaktheit des Wellengenerators und des damit ausgerüsteten Spannungswellengetriebes aus. Außerdem erhöhen die zusätzlich zu montierenden Bauteile die Herstellkosten in spürbarem Maße.

Alternativ ist es bekannt, den Innenring des radialflexiblen Wälzlagers auf den Lagersitz aufzukleben. Eine prozesssichere Verklebung ist jedoch sehr aufwändig, insbesondere weil eine sehr aufwändige Vorbereitung der Klebeflächen erforderlich ist und weil darüber hinaus ein sorgfältig überwachter Klebe- und Aushärteprozess durchgeführt werden muss.

Es ist daher die Aufgabe der vorliegenden Erfindung, ein einfacher ausführbares Verfahren zur Herstellung eines Spannungswellengetriebes anzugeben.

Die Aufgabe wird durch ein Verfahren gelöst, das dadurch gekennzeichnet ist, dass zumindest ein Teilbereich des Wellengenerators nach oder zeitlich parallel zu dem Anordnen des radialflexiblen Wälzlagers plastisch verformt wird.

Es ist eine weitere Aufgabe der vorliegenden Erfindung, einen Wellengenerator anzugeben, der ein schnelles sicheres Fixieren eines radialflexiblen Wälzlagers ermöglicht.

Diese Aufgabe wird durch einen Wellengenerator gelöst, der gekennzeichnet ist durch einen axial über den Lagersitz des radialflexiblen Wälzlagers hervorstehenden Umformabschnitt, wobei der Wellengenerator bei der Ausführung eines erfindungsgemäßen Verfahrens nach oder zeitlich parallel zu dem Anordnen des radialflexiblen Wälzlagers plastisch verformbar ist.

Der Umformabschnitt kann zeitlich parallel zu einem Anordnen eines radialflexiblen Wälzlagers auf dem Lagersitz oder in Folgeprozessen durch einen Umformprozess bearbeitet werden.

Die Erfindung hat den ganz besonderen Vorteil, dass eine prozesssichere, automatisierte und großserientaugliche Montage des radialflexiblen Wälzlagers auf dem Lagersitz des Wellengenerators ermöglicht ist, bei der das radialflexible Wälzlager sicher und zuverlässig gegen eine axiale Verschiebung gesichert wird. Hierbei sind vorteilhaft weder zusätzliche Bauteile, wie beispielsweise Sicherungsringe, erforderlich, noch muss aufwändig geklebt werden.

Bei einer besonders vorteilhaften Ausführung weist der Wellengenerator einen axial über den Lagersitz hervorstehenden Umformabschnitt auf, der nach dem Anordnen des radialflexiblen Wälzlagers auf dem Lagersitz plastisch verformt wurde. Der Umformabschnitt ist zusammen mit dem Teil des Wellengenerators, der den Lagersitz aufweist, vorzugsweise gemeinsam einstückig, insbesondere aus demselben Stück Ausgangsmaterial, hergestellt.

Der Wellengenerator und insbesondere der Umformabschnitt können insbesondere aus einem Metall oder einer Metalllegierung, insbesondere aus Stahl, hergestellt sein.

Vorzugsweise ist der Wellengenerator wenigsten in dem Teilbereich, der den Lagersitz beinhaltet, als gerader Zylinder mit einer von einer Kreisscheibe verschiedenen Grundform, beispielsweise einer ovalen oder elliptischen Grundform, ausgebildet. Bei einem geraden Zylinder steht die Mantelfläche stets senkrecht zu den Grundflächen, was vorteilhaft ist, damit die Mantelfläche den Lagersitz bereitstellen kann.

Der Umformabschnitt kann punktuell, insbesondere am mehreren Stellen entlang seines Umfangs, plastisch verformt werden. Alternativ kann auch vorgesehen sein, dass der Umformabschnitt über seinen gesamten Umfang plastisch verformt wird, wodurch eine besonders sichere Fixierung des radialflexiblen Wälzlagers in seiner Axialstellung erreicht wird.

Bei einer besonderen Ausführung des Wellengenerators ist der Lagersitz axial einerseits durch einen Axialanschlag und andererseits durch den Umformabschnitt begrenzt. Die Montage des radialflexiblen Wälzlagers geschieht hierbei in der Weise, dass das radialflexible Wälzlager zunächst axial so weit auf den Wellengenerator aufgeschoben wird, bis es den Axialanschlag erreicht. Anschließend wird der Umformabschnitt plastisch verformt, so dass das radialflexible Wälzlager oder wenigsten ein Innenring des radialflexiblen Wälzlagers in Axialrichtung relativ zu dem Lagersitz gesichert ist. Insbesondere kann vorteilhaft vorgesehen sein, dass ein Teil des Umformabschnitts bei dem Verformungsvorgang radial nach außen verformt wird und so eine Axialsicherung für das radialflexible Wälzlager bildet.

Statt einem einzigen Wälzlager können auch zwei (oder mehr) parallele Wälzlager auf den Lagersitz in der beschriebenen Weise aufgepresst werden, bevor das plastische Verformen erfolgt.

Vorzugsweise erfolgt das Verformen derart, dass der Wellengenerator ausschließlich im Bereich des Umformabschnitts und nicht im Bereich des Lagersitzes verformt wird.

Um eine über den Umformabschnitt hinausgehende Verformungen des Wellengenerators zu verhindern, kann dieser vorteilhaft wenigstens eine Ausnehmung aufweisen, die sich beim Verformen des Umformabschnitts aufwerfendes Material aufnimmt, so dass dieses die übrigen Abschnitte des Wellengenerators, insbesondere den Lagersitz, nicht erreichen kann. Die Ausnehmung kann vorteilhaft insbesondere im Übergangsbereich von dem Lagersitz zu dem Umformabschnitt angeordnet sein.

Bei einer ganz besonders vorteilhaften Ausführung ist die Ausnehmung als umlaufende Verformungsnut am Übergang von dem Lagersitz zu dem Umformabschnitt des Wellengenerators ausgebildet.

Bei einer besonderen Ausführung weist der Umformabschnitt im Querschnitt dieselbe Außenform auf, wie der Lagersitz. Alternativ oder zusätzlich kann vorgesehen sein, dass der Umformabschnitt im Querschnitt eine ovale, insbesondere elliptische, Außenform aufweist. Hierdurch ist vorteilhaft erreicht, dass der Umformabschnitt stufenlos in den Lagersitz übergehen kann, was das Aufpressen des radialflexiblen Wälzlagers erleichtert.

Insbesondere kann vorteilhaft vorgesehen sein, dass der Umformabschnitt kegelförmig ausgebildet ist, wobei er sich zu seinem freien, dem Lagersitz abgewandten Ende hin verjüngt. Hierdurch wird ein Problem, das beim Aufziehen des radialflexiblen Wälzlagers auf den Wellengenerator auftritt, vorteilhaft gelöst. Das Problem besteht darin, dass das Wälzlager nach seiner Herstellung eine im Querschnitt kreisrunde Form aufweist, während der Lagersitz des Wellengenerators im Querschnitt eine von der Kreisform abweichende Form aufweist. Der kegelförmig ausgebildete Umformabschnitt ermöglicht es, ein Wälzlager zunächst axial und insbesondere ohne dieses radial zu verformen, auf den Umformabschnitt aufzustecken. Anschließend kann das Wälzlager auf den Lagersitz in axialer Richtung aufgeschoben werden, wobei das Wälzlager radial automatisch die erforderliche Form annimmt. Die Mantelfläche des Umformabschnitts fungiert beim Aufschieben als Führungsfläche.

Bei einer besonderen Ausführung weist der Umformabschnitt eine ovale insbesondere elliptische, Innenkontur auf. Insbesondere kann vorteilhaft vorgesehen sein, dass die Innenkontur dieselbe Form aufweist, wie die Außenkontur. Auf diese Weise ist vorteilhaft erreicht, dass der Umformabschnitt als Ring oder als umlaufender Vorsprung ausgebildet sein kann, der überall dieselben radialen Abmessungen aufweist.

Alternativ kann der Umformabschnitt jedoch auch eine kreisrunde Innenkontur aufweisen. Bei einer solchen Ausführung kann der Umformabschnitt auch als Ring oder als umlaufender Vorsprung ausgebildet sein, wobei dieser auf Grund der ovalen Außenkontur jedoch nicht überall dieselben radialen Abmessungen aufweist.

Der Wellengenerator kann vorteilhaft beispielsweise mittels eines Umformwerkzeugs plastisch verformt werden, das für einen Umformvorgang in axialer Richtung mit einer Kraft gegen den Wellengenerator bewegt wird, die ausreichend ist, um den Wellengenerator plastisch zu verformen. Ein solcher Umformungsschritt ist besonders einfach, insbesondere auch automatisiert, durchführbar.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein erstes Ausführungsbeispiel eines erfindungsgemäßen Wellengenerators,
- Fig. 2: eine Detailansicht bezüglich des ersten Ausführungsbeispiels,
- Fig. 3: schematisch ein zweites Ausführungsbeispiel eines erfindungsgemäßen Wellengenerators,
- Fig. 4: das zweite Ausführungsbeispiel des Wellengenerators mit einem auf den Lagersitz aufgepressten Wälzlager,
- Fig. 5: eine Detailansicht des Umformabschnittes des zweiten Ausführungsbeispiels in Form einer Ausschnittvergrößerung aus Figur 4,
- Fig. 6: eine Illustration einer Möglichkeit zum plastischen Verformen des Umformabschnitts,
- Fig. 7: eine Detailansicht bezüglich der Möglichkeit zum plastischen Verformen des Umformabschnitts,
- Fig. 8: den Wellengenerator mit plastisch verformten Umformabschnitt,
- Fig. 9: eine Detailansicht des plastisch verformten Umformabschnitts, und
- Fig. 10: den Wellengenerator nach dem Verformungsvorgang.

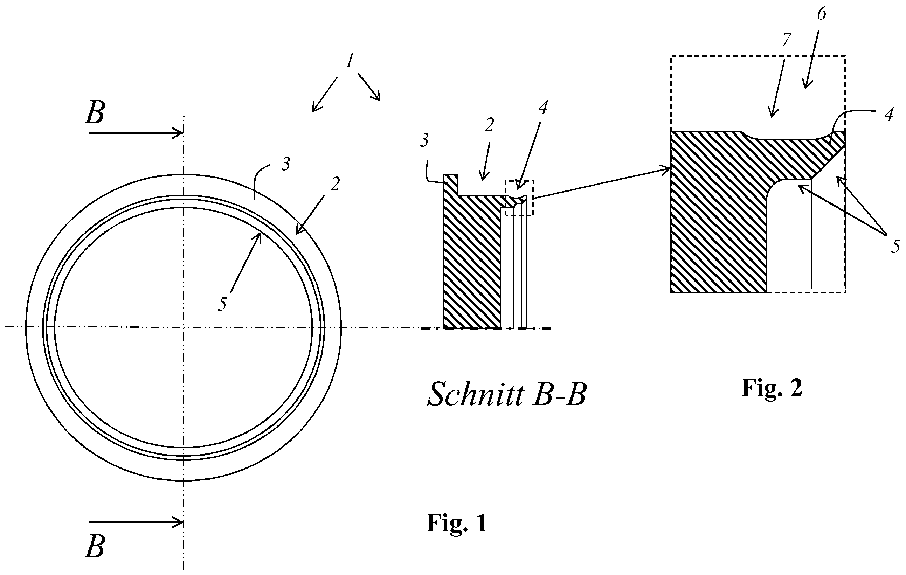

Fig. 1 zeigt schematisch ein Ausführungsbeispiel eines erfindungsgemäßen Wellengenerators 1. Der Wellengenerator 1 weist einen Lagersitz 2 für ein radialflexibles Wälzlager (in dieser Figur nicht eingezeichnet) auf. Der Lagersitz 2 ist axial einerseits durch einen Axialanschlag 3 begrenzt. Der Wellengenerator 1 weist außerdem einen axial über den Lagersitz hervorstehenden Umformabschnitt 4 auf, der insbesondere in der Figur 2, die eine Detailansicht zeigt, zu erkennen ist. Der Umformabschnitt 4 ist dazu ausgebildet und bestimmt, nach dem Anordnen eines radialflexiblen Wälzlagers auf dem Lagersitz 2 plastisch verformt zu werden.

Bei dieser Ausführung ist der Umformabschnitt 4 als umlaufender Vorsprung ausgebildet, der überall dieselben radialen Abmessungen aufweist. Dies ist dadurch erreicht, dass die Innenkontur 5 des Umformabschnitts 4 und dessen Außenkontur, oval ausgebildet ist.

Um eine über den Umformabschnitt 4 hinausgehende Verformung des Wellengenerators 1 zu verhindern, ist eine Ausnehmung 6 vorhanden, die beim Verformen des Umformabschnitts 4 sich aufwerfendes Material aufnimmt. Die Ausnehmung 6 ist als umlaufende Verformungsnut 7 am Übergang von dem Lagersitz 2 zu dem Umformabschnitt 4 ausgebildet.

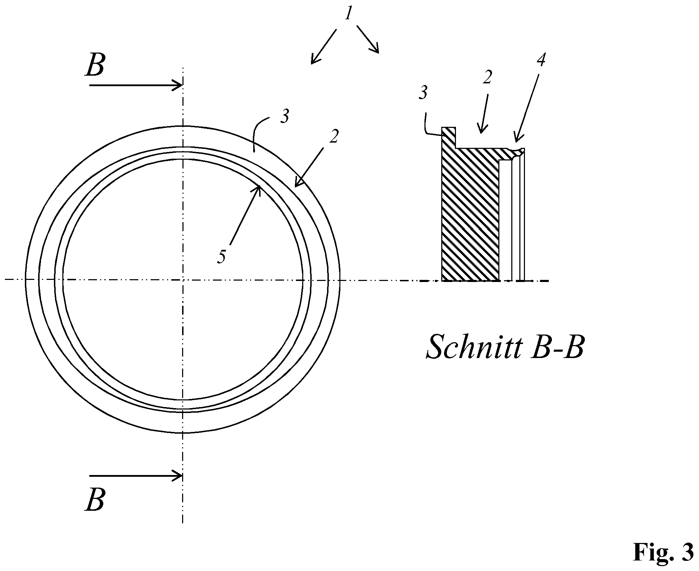

Fig. 3 zeigt schematisch ein zweites Ausführungsbeispiel eines erfindungsgemäßen Wellengenerators, das sich von dem in den Figuren 1 und 2 dargestellten Ausführungsbeispiel dadurch unterscheidet, dass der Umformabschnitt eine ovale Außenkontur, jedoch eine kreisrunde Innenkontur 5 aufweist.

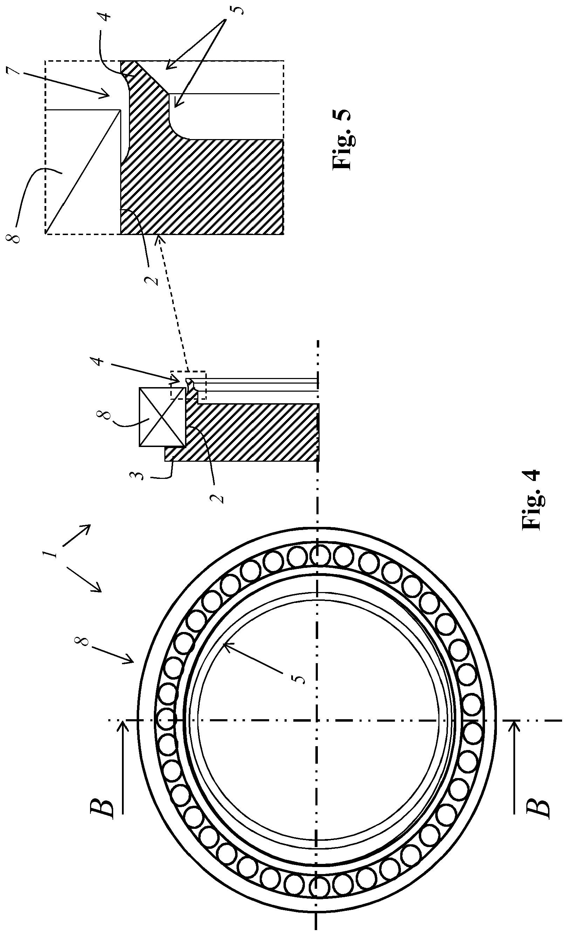

Fig. 4 zeigt das zweite Ausführungsbeispiel mit einem auf den Lagersitz 2 des Wellengenerators 1 aufgepressten Wälzlager 8. Das Wälzlager 8 wurde in axialer Richtung bis zum Erreichen des Axialanschlags 3 auf den Lagersitz 2 aufgeschoben. Fig. 5 zeigt eine Detailansicht des Umformabschnittes des zweiten Ausführungsbeispiels in Form einer Ausschnittvergrößerung aus Figur 4.

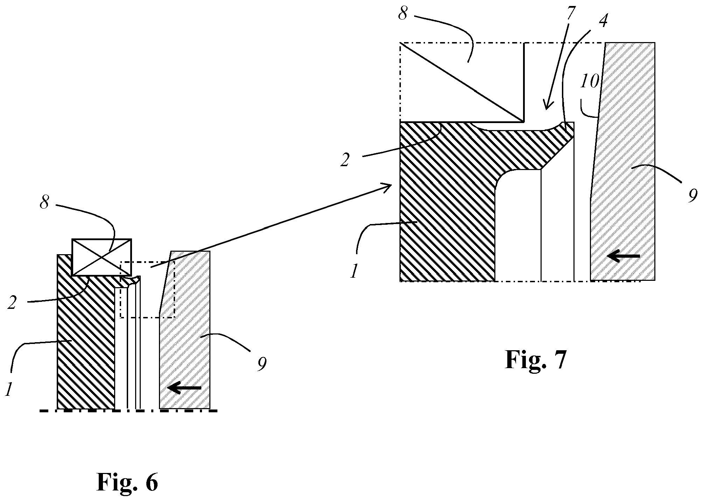

Die Figuren 6 und 7 zeigen ein Umformwerkzeug 9, das eine Umformkante 10 aufweist und das in axialer Richtung mit einer Kraft gegen den Wellengenerator 1 bewegt wird, die ausreichend ist, um den Wellengenerator 1 plastisch zu verformen. Die Umformkante 10 weist zur Radialrichtung einen von Null Grad verschiedenen Winkel, insbesondere einen Winkel im Bereich von 10 Grad bis 60 Grad oder im Bereich von 10 Grad bis 30 Grad auf.

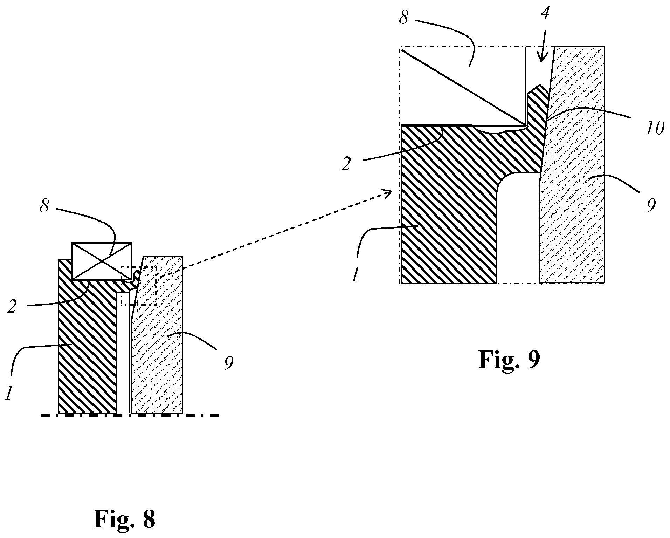

Die Figuren 8 und 9 illustrieren das plastische Verformen des Umformabschnitts 4. Ein Teil des Umformabschnitts 4 wird bei dem Verformungsvorgang radial nach außen verformt und bildet so eine Axialsicherung für das radialflexible Wälzlager 8. Das radialflexible Wälzlager 8, insbesondere dessen Innenring, ist nach dem Verformungsvorgang axial zwischen dem Axialanschlag 3 und dem radial nach außen verformten Teil des Umformabschnitts 4 eingeklemmt.

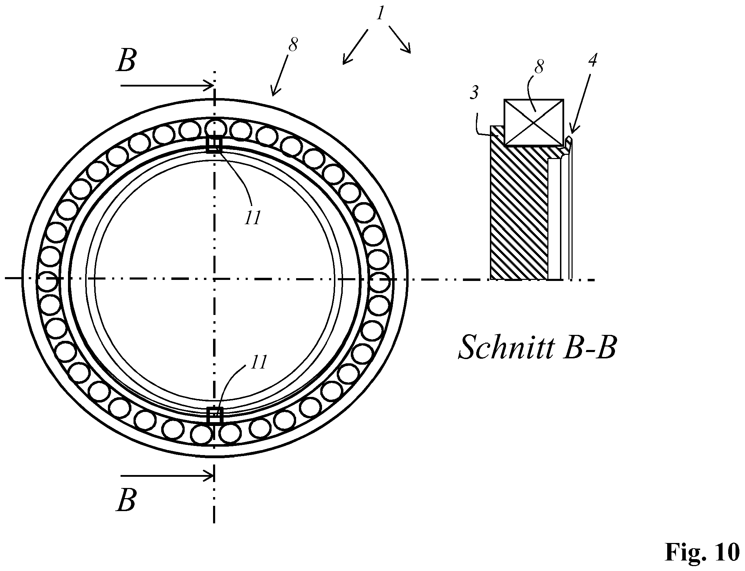

Fig. 10 zeigt das zweite Ausführungsbeispiel des Wellengenerators 1 nach dem beschriebenen Verformungsvorgang zusammen mit dem auf dem Lagersitz fixierten Wälzlager 8. Es ist zu erkennen, dass der Umformabschnitt 4 an zwei gegenüberliegenden Verformungsstellen 11 mittels des Umformwerkzeugs 9 verformt wurde.

### Bezugszeichenliste:

- 1: Wellengenerator
- 2: Lagersitz
- 3: Axialanschlag
- 4: Umformabschnitt
- 5: Innenkontur
- 6: Ausnehmung
- 7: Verformungsnut
- 8: Wälzlager
- 9: Umformwerkzeug
- 10: Umformkante
- 11: Verformungsstellen

## Patentansprüche

1. Verfahren zum Herstellen eines Spannungswellengetriebes, bei dem ein radialflexibles Wälzlager (8) auf dem Lagersitz (2) eines Wellengenerators (1) angeordnet wird, **dadurch gekennzeichnet, dass** zumindest ein Teilbereich des Wellengenerators (1) nach oder zeitlich parallel zu dem Anordnen des radialflexiblen Wälzlagers (8) plastisch verformt wird.

2. Verfahren nach Anspruch 1, **dadurch gekennzeichnet, dass**
a. der Wellengenerator (1) derart verformt wird, dass nach der Verformung ein axiales Verschieben des Wälzlagers (8) verhindert ist, oder dass
b. der Wellengenerator (1) derart verformt wird, dass nach der Verformung ein axiales Verschieben eines Lagerkäfigs und/oder eines Innenrings des Wälzlagers (8) verhindert ist.

3. Verfahren nach Anspruch 1 oder 2, **dadurch gekennzeichnet, dass**
a. der Wellengenerator (1) einen axial über den Lagersitz (2) hervorstehenden Umformabschnitt (4) aufweist, der nach oder zeitlich parallel zu dem Anordnen des radialflexiblen Wälzlagers (8) plastisch verformt wird, und/oder dass
b. der Wellengenerator (1) einen axial über den Lagersitz (2) hervorstehenden Umformabschnitt (4) aufweist, der punktuell, insbesondere an mehreren Stellen entlang seines Umfangs, plastisch verformt wird oder wobei der Umformabschnitt (4) über seinen gesamten Umfang plastisch verformt wird, und/oder dass
c. der Wellengenerator (1) einen axial über den Lagersitz (2) hervorstehenden Umformabschnitt (4) aufweist, wobei der Lagersitz (2) axial einerseits durch einen Axialanschlag (3) und andererseits durch den Umformabschnitt (4) begrenzt ist und das radialflexible Wälzlager (8) zunächst axial so weit auf den Wellengenerator (1) aufgeschoben wird, bis es den Axialanschlag (3) erreicht, und anschließend der Umformabschnitt (4) plastisch verformt wird.

4. Verfahren nach einem der Ansprüche 1 bis 3, **dadurch gekennzeichnet, dass**
a. der Wellengenerator (1) wenigstens eine Ausnehmung (6) aufweist, die sich beim Verformen aufwerfendes Material aufnimmt oder dass der Wellengenerator (1) eine im Übergangsbereich von dem Lagersitz (2) zu einem Umformabschnitt (4) eine Ausnehmung (6) aufweist, oder dass
b. der Wellengenerator (1) wenigstens eine Ausnehmung (6) aufweist, die sich beim Verformen aufwerfendes Material aufnimmt oder dass der Wellengenerator (1) eine im Übergangsbereich von dem Lagersitz (2) zu einem Umformabschnitt (4) eine Ausnehmung (6) aufweist, wobei die Ausnehmung (6) als umlaufende Verformungsnut (7) am Übergang von dem Lagersitz (2) zu dem Umformabschnitt (4) des Wellengenerators (1) ausgebildet ist.

5. Verfahren nach Anspruch 3 oder 4, **dadurch gekennzeichnet, dass**
a. der Umformabschnitt (4) im Querschnitt dieselbe Außenform aufweist, wie der Lagersitz (2), und/oder dass
b. der Umformabschnitt (4) im Querschnitt eine ovale Außenform aufweist.

6. Verfahren nach einem der Ansprüche 3 bis 5, **dadurch gekennzeichnet, dass**
a. der Umformabschnitt (4) eine kreisrunde Innenkontur (5) aufweist oder dass
b. der Umformabschnitt (4) eine ovale oder elliptische Innenkontur (5) aufweist oder dass
c. die Innenkontur (5) des Umformabschnitts (4) dieselbe Form aufweist, wie die Außenkontur des Umformabschnitts (4).

7. Verfahren nach einem der Ansprüche 3 bis 6, **dadurch gekennzeichnet, dass** der Umformabschnitt (4) kegelförmig ausgebildet ist oder dass der Umformabschnitt (4) kegelförmig ausgebildet ist und sich zum freien Ende hin verjüngt.

8. Verfahren nach einem der Ansprüche 1 bis 7, **dadurch gekennzeichnet, dass** der Wellengenerator (1) mittels eines Umformwerkzeugs (9) plastisch verformt wird, das für einen Umformvorgang in axialer Richtung gegen den Wellengenerator (1) bewegt wird.

9. Wellengenerator (1) für ein Spannungswellengetriebe, der einen Lagersitz (2) für ein radialflexibles Wälzlager (8) aufweist, **gekennzeichnet durch** einen axial über diesen Lagersitz (2) hervorstehenden Umformabschnitt (4), der bei der Ausführung eines Verfahrens nach einem der Ansprüche 1 bis 8 nach oder zeitlich parallel zu dem Anordnen des radialflexiblen Wälzlagers (8) plastisch verformbar ist.

10. Wellengenerator (1) nach Anspruch 9, **dadurch gekennzeichnet, dass**
a. der Umformabschnitt (4) als umlaufender Vorsprung und/oder ringförmig ausgebildet ist, und/oder dass
b. der Lagersitz (2) durch einen Axialanschlag (3) begrenzt ist, und/oder dass
c. der Lagersitz (2) einerseits durch den Axialanschlag (3) und andererseits durch den Umformabschnitt (4) begrenzt ist.

11. Wellengenerator (1) nach Anspruch 9 oder 10, **dadurch gekennzeichnet, dass**
a. der Wellengenerator (1) wenigstens eine Ausnehmung (6) aufweist, die sich beim Verformen aufwerfendes Material aufnimmt, oder dass
b. der Wellengenerator (1) wenigstens eine Ausnehmung (6) aufweist, die sich beim Verformen aufwerfendes Material aufnimmt, wobei die Ausnehmung (6) als umlaufende Verformungsnut (7) am Übergang von dem Lagersitz (2) zu dem Umformabschnitt (4) des Wellengenerators (1) ausgebildet ist.

12. Wellengenerator (1) nach einem der Ansprüche 9 bis 11, **dadurch gekennzeichnet, dass**
a. der Umformabschnitt (4) im Querschnitt dieselbe Außenform aufweist, wie der Lagersitz (2), und/oder dass
b. der Umformabschnitt (4) im Querschnitt eine ovale Außenform aufweist, und/oder dass
c. der Umformabschnitt (4) eine kreisrunde Innenkontur (5) aufweist oder dass
d. der Umformabschnitt (4) eine ovale Innenkontur (5) aufweist.

13. Wellengenerator (1) nach einem der Ansprüche 9 bis 12, **dadurch gekennzeichnet, dass** der Umformabschnitt (4) kegelförmig ausgebildet ist oder dass der Umformabschnitt (4) kegelförmig ausgebildet ist und sich zum freien Ende hin verjüngt.

14. Spannungswellengetriebe hergestellt mit einem Wellengenerator nach einem der Ansprüche 9 bis 13, wobei der Wellengenerator (1) zur Axialsicherung wenigstens eines auf dem Lagersitz (2) angeordneten radialflexiblen Wälzlagers (8) plastisch verformt ist.

15. Spannungswellengetriebe nach Anspruch 14, **dadurch gekennzeichnet, dass**
a. ein axial über den Lagersitz (2) hervorstehender Umformabschnitt (4) zur Axialsicherung des radialflexiblen Wälzlagers (8) plastisch verformt ist, und/oder dass
b. ein axial über den Lagersitz (2) hervorstehender Umformabschnitt (4) zur Axialsicherung des radialflexiblen Wälzlagers (8) plastisch verformt ist, wobei der Umformabschnitt (4) punktuell, insbesondere am mehreren Stellen entlang seines Umfangs, plastisch verformt ist oder dass der Umformabschnitt (4) über seinen gesamten Umfang plastisch verformt ist, und/oder dass
c. das Spannungswellengetriebe zwei zueinander parallele, auf den Lagersitz (2) aufgepresste Wälzlager (8) aufweist.

## Claims

1. Method for producing a wave gear drive, in which method a radially flexible roller bearing (8) is disposed on the bearing seat (2) of a wave generator (1), **characterized in that** at least a sub-region of the wave generator (1) is plastically deformed after, or temporally parallel with, the disposal of the radially flexible roller bearing (8).

2. Method according to Claim 1, **characterized in that**
a) the wave generator (1) is deformed in such a manner that any axial displacement of the roller bearing (8) after the deformation is prevented; or **in that**
b) the wave generator (1) is deformed in such a manner that any axial displacement of a bearing cage and/or of an inner race of the roller bearing (8) after the deformation is prevented.

3. Method according to Claim 1 or 2, **characterized in that**
a) the wave generator (1) has a forming portion (4) which projects axially beyond the bearing seat (2) and which is plastically deformed after, or temporally parallel with, the disposal of the radially flexible roller bearing (8); and/or **in that**
b) the wave generator (1) has a forming portion (4) which projects axially beyond the bearing seat (2) and which is plastically deformed in a punctiform manner, in particular at a plurality of locations along the circumference of said forming portion (4), or wherein the forming portion (4) is plastically deformed over the entire circumference of said forming portion (4); and/or **in that**
c) the wave generator (1) has a forming portion (4) which projects axially beyond the bearing seat (2), wherein the bearing seat (2) is axially delimited by an axial detent (3), on the one hand, and by the forming portion (4), on the other hand, and the radially flexible roller bearing (8) is first push-fitted axially onto the wave generator (1) so far until said radially flexible roller bearing (8) reaches the axial detent (3), and the forming portion (4) is subsequently plastically deformed.

4. Method according to one of Claims 1 to 3, **characterized in that**
a) the wave generator (1) has at least one clearance (6) which receives material that is distorted in the deformation, or **in that** the wave generator (1) has a clearance (6) in the transition region from the bearing seat (2) to a forming portion (4); or **in that**
b) the wave generator (1) has at least one clearance (6) which receives material that is distorted in the deformation, or **in that** the wave generator (1) has a clearance (6) in a transition region from the bearing seat (2) to a forming portion (4), wherein the clearance (6) is configured as an encircling deformation groove (7) at the transition from the bearing seat (2) to the forming portion (4) of the wave generator (1).

5. Method according to Claim 3 or 4, **characterized in that**
a) the forming portion (4) in the cross section has the same external shape as the bearing seat (2); and/or **in that**
b) the forming portion (4) in the cross section has an oval external shape.

6. Method according to one of Claims 3 to 5, **characterized in that**
a) the forming portion (4) has a circular internal contour (5); or **in that**
b) the forming portion (4) has an oval or elliptic internal contour (5); or **in that**
c) the internal contour (5) of the forming portion (4) has the same shape as the external contour of the forming portion (4).

7. Method according to one of Claims 3 to 6, **characterized in that** the forming portion (4) is configured so as to be conical, or **in that** the forming portion (4) is configured so as to be conical and tapers towards the free end.

8. Method according to one of Claims 1 to 7, **characterized in that** the wave generator (1) is plastically deformed by means of a forming tool (9) which for a forming procedure is moved in the axial direction against the wave generator (1).

9. Wave generator (1) for a wave gear drive, said wave generator (1) having a bearing seat (2) for a radially flexible roller bearing (8), **characterized by** a forming portion (4) which projects axially beyond said bearing seat (2) and which when carrying out a method according to one of Claims 1 to 8 is plastically deformable after, or temporally parallel with, the disposal of the radially flexible roller bearing (8).

10. Wave generator (1) according to Claim 9, **characterized in that**
a) the forming portion (4) is configured as an encircling protrusion and/or so as to be annular; and/or **in that**
b) the bearing seat (2) is delimited by an axial detent (3); and/or **in that**
c) the bearing seat (2) is delimited by the axial detent (3), on the one hand, and by the forming portion (4), on the other hand.

11. Wave generator (1) according to Claim 9 or 10, **characterized in that**
a) the wave generator (1) has at least one clearance (6) which receives material that is distorted in the deformation; or **in that**
b) the wave generator (1) has at least one clearance (6) which receives material that is distorted in the deformation, wherein the clearance (6) is configured as an encircling deformation groove (7) at the transition from the bearing seat (2) to the forming portion (4) of the wave generator (1).

12. Wave generator (1) according to one of Claims 9 to 11, **characterized in that**
a) the forming portion (4) in the cross section has the same external shape as the bearing seat (2); and/or **in that**
b) the forming portion (4) in the cross section has an oval external shape; and/or **in that**
c) the forming portion (4) has a circular internal contour (5); or **in that**
d) the forming portion (4) has an oval internal contour (5).

13. Wave generator (1) according to one of Claims 9 to 12, **characterized in that** the forming portion (4) is configured so as to be conical, or **in that** the forming portion (4) is configured so as to be conical and tapers towards the free end.

14. Wave gear drive produced with a wave generator according to one of Claims 9 to 13, wherein the wave generator (1) is plastically deformed for axially securing at least one radially flexible roller bearing (8) disposed on the bearing seat (2) .

15. Wave gear drive according to Claim 14, **characterized in that**
a) a forming portion (4) which projects axially beyond the bearing seat (2) is plastically deformed for axially securing the radially flexible roller bearing (8); and/or **in that**
b) a forming portion (4) which projects axially beyond the bearing seat (2) is plastically deformed for axially securing the radially flexible roller bearing (8), wherein the forming portion (4) is plastically deformed in a punctiform manner, in particular at a plurality of locations along the circumference of said forming portion (4), or **in that** the forming portion (4) is elastically deformed over the entire circumference of said forming portion (4); and/or **in that**
c) the wave gear drive has two mutually parallel roller bearings (8) which are press-fitted onto the bearing seat (2).

## Revendications

1. Procédé de fabrication d'une transmission à démultiplication harmonique, dans lequel un palier à roulement (8) radialement flexible est disposé sur le siège de palier (2) d'un générateur d'ondes (1), **caractérisé en ce qu'**au moins une zone partielle du générateur d'ondes (1) est soumise à une déformation plastique après ou en parallèle dans le temps à la disposition du palier à roulement (8) radialement flexible.

2. Procédé selon la revendication 1, **caractérisé en ce que**
a. le générateur d'ondes (1) est déformé de telle sorte qu'après la déformation, un décalage axial du palier à roulement (8) est empêché, ou **en ce que**
b. le générateur d'ondes (1) est déformé de telle sorte qu'après la déformation, un décalage axial d'une cage de palier et/ou d'une bague intérieure du palier à roulement (8) est empêché.

3. Procédé selon la revendication 1 ou 2, **caractérisé en ce que**
a. le générateur d'ondes (1) présente une partie façonnée (4) dépassant axialement du siège de palier (2) et qui est soumise à une déformation plastique après ou en parallèle dans le temps à la disposition du palier à roulement (8) radialement flexible, et/ou **en ce que**
b. le générateur d'ondes (1) présente une partie façonnée (4) dépassant axialement du siège de palier (2) et qui est soumise à une déformation plastique de manière localisée, en particulier en plusieurs endroits le long de sa circonférence, et la partie façonnée (4) étant soumise à une déformation plastique sur toute sa circonférence, et/ou **en ce que**
c. le générateur d'ondes (1) présente une partie façonnée (4) dépassant du siège de palier (2), dans lequel le siège de palier (2) est axialement limité d'une part par une butée axiale (3) et d'autre part par la partie façonnée (4), et le palier à roulement (8) radialement flexible est d'abord enfilé axialement sur le générateur d'ondes (1) jusqu'à ce qu'il atteigne la butée axiale (3), et ensuite, la partie façonnée (4) est soumise à une déformation plastique.

4. Procédé selon l'une quelconque des revendications 1 à 3, **caractérisé en ce que**
a. le générateur d'ondes (1) présente au moins un creux (6) recevant la matière soulevée lors de la déformation, ou **en ce que** le générateur d'ondes (1) présente un creux (6) dans la zone de transition du siège de palier (2) à une partie façonnée (4), ou **en ce que**
b. le générateur d'ondes (1) présente au moins un creux (6) recevant la matière soulevée lors de la déformation, ou **en ce que** le générateur d'ondes (1) présente un creux (6) dans la zone de transition du siège de palier (2) à une partie façonnée (4), le creux (6) étant réalisé sous la forme d'une rainure de déformation périphérique (7) au niveau de la transition du siège de palier (2) à la partie façonnée (4) du générateur d'ondes (1).

5. Procédé selon la revendication 3 ou 4, **caractérisé en ce que**
a. la partie façonnée (4) présente en section transversale la même forme extérieure que le siège de palier (2), et/ou **en ce que**
b. la partie façonnée (4) présente en section transversale une forme extérieure ovale.

6. Procédé selon l'une quelconque des revendications 3 à 5, **caractérisé en ce que**
a. la partie façonnée (4) présente un contour intérieur circulaire (5), ou **en ce que**
b. la partie façonnée (4) présente un contour intérieur ovale ou elliptique (5), ou **en ce que**
c. le contour intérieur (5) de la partie façonnée (4) présente la même forme que le contour extérieur de la partie façonnée (4).

7. Procédé selon l'une quelconque des revendications 3 à 6, **caractérisé en ce que** la partie façonnée (4) est réalisée de manière conique, ou **en ce que** la partie façonnée (4) est réalisée de manière conique en s'effilant en direction de l'extrémité libre.

8. Procédé selon l'une quelconque des revendications 1 à 7, **caractérisé en ce que** le générateur d'ondes (1) est soumis à une déformation plastique au moyen d'un outil de façonnage (9) qui est déplacé contre le générateur d'ondes (1) dans la direction axiale pour une opération de façonnage.

9. Générateur d'ondes (1) pour une transmission à démultiplication harmonique présentant un siège de palier (2) pour un palier à roulement (8) radialement flexible, **caractérisé par** une partie façonnée (4) dépassant axialement de ce siège de palier (2) et qui, lors de l'exécution d'un procédé selon l'une quelconque des revendications 1 à 8, est soumise à une déformation plastique après ou en parallèle dans le temps à la disposition du palier à roulement (8) radialement flexible.

10. Générateur d'ondes (1) selon la revendication 9, **caractérisé en ce que**
a. la partie façonnée (4) est réalisée sous la forme d'une saillie périphérique et/ou d'un anneau, et/ou **en ce que**
b. le siège de palier (2) est limité par une butée axiale (3), et/ou **en ce que**
c. le siège de palier (2) est limité d'une part par la butée axiale (3) et d'autre part par la partie façonnée (4).

11. Générateur d'ondes (1) selon la revendication 9 ou 10, **caractérisé en ce que**
a. le générateur d'ondes (1) présente au moins un creux (6) recevant la matière soulevée lors de la déformation, ou **en ce que**
b. le générateur d'ondes (1) présente au moins un creux (6) recevant la matière soulevée lors de la déformation, le creux (6) étant réalisé sous la forme d'une rainure de déformation périphérique (7) au niveau de la transition du siège de palier (2) à la partie façonnée (4) du générateur d'ondes (1).

12. Générateur d'ondes (1) selon l'une quelconque des revendications 9 à 11, **caractérisé en ce que**
a. la partie façonnée (4) présente en section transversale la même forme extérieure que le siège de palier (2), et/ou **en ce que**
b. la partie façonnée (4) présente en section transversale une forme extérieure ovale, et/ou **en ce que**
c. la partie façonnée (4) présente un contour intérieur circulaire (5), ou **en ce que**
d. la partie façonnée (4) présente un contour intérieur ovale (5).

13. Générateur d'ondes (1) selon l'une quelconque des revendications 9 à 12, **caractérisé en ce que** la partie façonnée (4) est réalisée de manière conique, ou **en ce que** la partie façonnée (4) est réalisée de manière conique en s'effilant en direction de l'extrémité libre.

14. Transmission à démultiplication harmonique, fabriquée avec un générateur d'ondes selon l'une quelconque des revendications 9 à 13, dans laquelle le générateur d'ondes (1) est soumis à une déformation plastique en vue d'un blocage axial d'au moins un palier à roulement (8) radialement flexible disposé sur le siège de palier (2).

15. Transmission à démultiplication harmonique selon la revendication 14, **caractérisée en ce que**
a. une partie façonnée (4) dépassant axialement du siège de palier (2) est soumise à une déformation plastique en vue d'un blocage axial du palier à roulement (8) radialement flexible, et/ou **en ce que**
b. une partie façonnée (4) dépassant axialement du siège de palier (2) est soumise à une déformation plastique en vue d'un blocage axial du palier à roulement (8) radialement flexible, la partie façonnée (4) étant soumise à une déformation plastique de manière localisée, en particulier à plusieurs endroits le long de sa circonférence, ou **en ce que** la partie façonnée (4) est soumise à une déformation plastique sur toute sa circonférence, et/ou **en ce que**
c. la transmission à démultiplication harmonique présente deux paliers à roulement (8) parallèles entre eux et pressés sur le siège de palier (2).
